# EUROPEAN PATENT APPLICATION

(11) **EP 4 847 424 A1**
(43) Date of publication of application: **02.12.2026**
(21) Application number: 26180836.4
(22) Date of filing: 25.05.2026
(51) Int. Cl.: B65G 41/00, B07B 1/00, B65G 21/10

(54) **FOLDING CONVEYOR**

(30) Priority: 27.05.2025 GB 202508235
(71) Applicant: Terex GB Limited, Dungannon County Tyrone BT71 4DR (GB)
(72) Inventor: MURPHY, Glenn, Craigavon, BT65 5BH (GB)
(74) Representative: FRKelly

(57) **Abstract**

A folding conveyor comprises a base section (20), a first folding section (22), and a second folding section (24) arranged end-to-end and pivotably coupled to each other and further including a third folding section (26) arranged end-to-end with said second folding section. A respective fixed length link or linkage is pivotably coupled between alternate conveyor sections. Folding and unfolding of the conveyor can be achieved through operation of one actuator set in conjunction with the action of the fixed length links or linkages.

## Description

### FIELD OF THE INVENTION

This invention relates to conveyors. The invention relates particularly to conveyors for use on material processing apparatus.

### BACKGROUND TO THE INVENTION

It is known for material processing apparatus, such as aggregate screening apparatus, to include conveyors that can fold to facilitate transport of the apparatus. For example a folding conveyor may include three foldable sections connected to a base, wherein a respective set of hydraulic actuators is provided for folding and unfolding each foldable section. Typically, each set of actuators is independently controlled by a human operator.

To avoid damaging the conveyor and/or the apparatus, the operator must operate the actuators correctly to implement a designated folding and unfolding sequence. However, since each set of actuators is independently controlled, there is scope for human error resulting in conveyor configurations that are damaging or otherwise detrimental to the conveyor's life expectancy. Further, it is common for the actuator controls to be located on one side of the apparatus, which makes it difficult for the operator to see all of the conveyor during the entire folding/unfolding sequence in cases where sections of the conveyor may be located at a different side of the apparatus during part of the folding/unfolding sequence. Another problem is that the actuators are susceptible to damage, corrosion, leakage and failure, especially in harsh working environments such as quarries, and provide a potential pathway for contaminant ingress to the hydraulic system. It is therefore advantageous to minimize the number of actuators used.

It would be desirable to mitigate the problems outlined above.

### SUMMARY OF THE INVENTION

From one aspect the invention provides a conveyor comprising: a base section; a first folding section; and a second folding section, wherein said base section, said first folding section and said second folding section are arranged end-to-end, said first folding section being pivotably coupled to said base section for pivoting movement about a first pivot axis, and said second folding section being pivotably coupled to said first folding section for pivoting movement about a second pivot axis, said first and second pivot axes being parallel with each other, and wherein at least one first link, having a fixed or fixable length, is pivotably coupled, in use, to said base section, or to a base structure, for pivoting movement about a third pivot axis and to said second folding section for pivoting movement about a fourth pivot axis, said third and fourth pivot axes being parallel with each other and with said first and second pivot axes.

Said base section typically provides a feed end of the conveyor.

In preferred embodiments, said at least one first link is arranged to cause pivoting movement of either one or said first and second folding sections about the respective first or second pivot axis in response to pivoting movement of the other of said first and second folding sections about the respective first or second pivot axis.

Preferably, said at least one first link is arranged such that, in response to pivoting movement of said first folding section with respect to said base section about said first pivot axis, said at least one first link causes said second folding section to pivot with respect to said first folding section about said second pivot axis and/or such that in response to pivoting movement of said second folding section with respect to said first folding section about said second pivot axis, said at least one first link causes said first folding section to pivot with respect to said base section about said first pivot axis.

In preferred embodiments, the conveyor is operable between a deployed state and a folded state by pivoting movement of the folding sections, preferably including pivoting movement of said first folding section with respect to said base section about said first pivot axis, and pivoting movement of said second folding section with respect to said first folding section about said second pivot axis, and wherein, preferably, in said deployed state the folding sections are arranged to facilitate conveying material from a feed end of the conveyor to a discharge end of the conveyor and are typically coplanar or substantially coplanar with each other, and in the folded state the folding sections are typically non-coplanar with each other.

In preferred embodiments, the conveyor includes a third folding section arranged end-to-end with said second folding section and being pivotably coupled to said second folding section for pivoting movement about a fifth pivot axis, said fifth pivot axis being parallel with said first and second pivot axes, and wherein at least one second link, having a fixed or fixable length, is pivotably coupled to said first section for pivoting movement about a sixth pivot axis and to said third folding section for pivoting movement about a seventh pivot axis, said sixth and seventh pivot axes being parallel with each other and with said first and second pivot axes. Said at least one second link may be arranged to cause pivoting movement of either one or said second and third folding sections about the respective second or fifth pivot axis in response to pivoting movement of the other of said second and third folding sections about the respective second or fifth pivot axis. Preferably, said at least one second link is arranged such that, in response to pivoting movement of said second folding section with respect to said first folding section about said second pivot axis, said at least one second link causes said third folding section to pivot with respect to said second folding section about said fifth pivot axis and/or such that in response to pivoting movement of said third folding section with respect to said second folding section about said fifth pivot axis, said at least one second link causes said second folding section to pivot with respect to said first section about said second pivot axis.

Typically, the conveyor includes or is co-operable with actuating means arranged to cause pivoting movement of at least one of said folding sections, the actuating means preferably being arranged to act on, preferably to act directly on, one of said folding sections, conveniently on said first folding section. The actuating means may be operable to operate said conveyor between said deployed state and said folded state. Typically, the actuating means comprises at least one actuator, preferably at least one linear actuator, and wherein, advantageously, said at least one actuator comprises a single actuator or a single set of actuators. The actuating means may be arranged to cause pivoting movement of said first folding section with respect to said base section, preferably by acting directly on said first folding section. Said at least one actuator is typically coupled between one of said folding sections, preferably said first folding section, and said base section, or between one of said folding sections, preferably said first folding section, and a base structure, wherein said base structure may be a ground structure or part of an apparatus on which the conveyor is provided. Optionally, said at least one actuator is coupled between any two of said folding sections.

Typically, said at least one first link comprises first and second first links spaced apart in a transverse direction of the conveyor, conveniently being located at a respective side of the conveyor, and preferably being parallel, or substantially parallel, with each other.

Typically, the, or each, first link comprises a bar, rod or other rigid, or substantially rigid, structure.

Optionally the, or each, first link includes a length-adjusting mechanism for adjusting the length of the respective first link.

Typically, said third pivot axis is spaced apart from said first pivot axis at least in a direction that is perpendicular to both the longitudinal and transverse axes of the conveyor, such that said third pivot axis is typically located above or below the first pivot axis when the conveyor is in use.

Typically, the third pivot axis is spaced apart from the first pivot axis in a longitudinal direction of the conveyor.

Typically, said fourth pivot axis is spaced apart from said second pivot axis at least in a direction that is perpendicular to both the longitudinal and transverse axes of the conveyor, such that said fourth pivot axis is typically located above or below the second pivot axis when the conveyor is in use.

Typically, the fourth pivot axis is spaced apart from the second pivot axis in a longitudinal direction of the conveyor.

Typically, the, or each, first link extends obliquely with respect to the longitudinal axis of the first conveyor section and/or passes through the plane in which both the first and second pivot axes lie.

Typically, said at least one second link comprises first and second links spaced apart in a transverse direction of the conveyor, conveniently being located at a respective side of the conveyor, and preferably being parallel, or substantially parallel, with each other.

Typically, the, or each, second link comprises a bar, rod or other rigid, or substantially rigid, structure.

Optionally, the, or each, second link includes a length-adjusting mechanism for adjusting the length of the respective second link.

Typically, said sixth pivot axis is spaced apart from said second pivot axis at least in a direction that is perpendicular to both the longitudinal and transverse axes of the conveyor, such that said sixth pivot axis is typically located above or below the second pivot axis when the conveyor is in use.

Typically, the sixth pivot axis is spaced apart from the second pivot axis in a longitudinal direction of the conveyor.

Typically, said seventh pivot axis is spaced apart from said fifth pivot axis at least in a direction that is perpendicular to both the longitudinal and transverse axes of the conveyor, such that said seventh pivot axis is typically located above or below the fifth pivot axis when the conveyor is in use.

Typically, the seventh pivot axis is spaced apart from the fifth pivot axis in a longitudinal direction of the conveyor.

Typically, the, or each, second link extends obliquely with respect to the longitudinal axis of the second conveyor section and/or passes through the plane in which both the second and third pivot axes lie.

Preferably said first folding section is pivotably coupled to said base section by a coupling that allows limited pivoting movement of said first folding section with respect to said base section about said first axis without causing said at least one first link to effect relative pivoting movement between said first and second folding sections about said second pivot axis, wherein said coupling may comprise a pivot and a journal bearing, the journal being configured to allow linear movement of the journal bearing with respect to the pivot.

Preferably, each folding section includes, and/or is co-operable with, at least one stop formation or other stop means configured to limit pivoting movement of the respective folding section in an angular direction corresponding to unfolding of the conveyor in order to stop pivoting movement of the respective folding section when the deployed state of the conveyor is reached.

From another aspect, the invention provides an apparatus comprising at least one conveyor as claimed in any preceding claim, wherein said apparatus is optionally a material processing apparatus, for example a material screening apparatus, a material crushing apparatus or a material washing apparatus. Said at least one first link may be coupled to said base structure, and said base structure may be provided by a part of said apparatus other than said at least one conveyor. Said at least one actuator may be coupled between one of said folding sections, preferably said first folding section and said base structure, and said base structure may be provided by a part of said apparatus other than said at least one conveyor.

In preferred embodiments, articulation of the conveyor can be achieved through operation of one actuator set in conjunction with a fixed length link or linkage coupled between alternate conveyor sections.

Whereas defined control of multiple actuators can be achieved through sequencing circuits or advanced control systems, embodiments of the invention provide articulation control with simplicity. For example articulation of three folding conveyor section is achieved using one actuator or one set of actuators. In preferred embodiments, the sequencing, or arrangement, of the folding/unfolding of the conveyor sections is mechanically defined by the link(s), which advantageously have a fixed length during folding/unfolding. Advantageously, the action of a single actuator, or single set of actuators, causes all of the conveyor sections to fold/unfold, as applicable.

In preferred embodiments, the conveyor may be described as modular in that it may be installed on, or removed from, a material processing apparatus or other base structure as a unit or module. This is facilitated by the preferred arrangement whereby the components of the conveyor (e.g. the link(s), conveyor sections and actuator(s), as applicable) are self-contained such that only the base section needs to be mounted on the base structure.

In preferred embodiments, the arrangement is such that the conveyor sections fold, or pivot, in the same first angular direction (e.g. clockwise or anticlockwise) when the conveyor is folding, and such that the conveyor sections fold, or pivot, in the same second angular direction (opposite to the first angular direction e.g. anticlockwise or clockwise) when the conveyor is unfolding.

Advantageously, in preferred embodiments, the folding sequential conveyor sections coupled by links or linkages ensures that the conveyor traces the same repeatable pathway throughout articulation. This simplified approach removes complexity from the human operator, adding predictability to the folding operation and removing potential for the operator to damage plant.

Further advantageous aspects of the invention will be apparent to those ordinarily skilled in the art upon review of the following description of a specific embodiment and with reference to the accompanying drawings.

### BRIEF DESCRIPTION OF THE DRAWINGS

An embodiment of the invention is now described by way of example and with reference to the accompanying drawings in which like numerals are used to denote like parts and in which:
Figure 1 is a perspective view of a material processing apparatus embodying one aspect of the invention and including two instances of a conveyor embodying another aspect of the invention, the conveyors being shown in a deployed state;
Figure 2 is a perspective view of the material processing apparatus of Figure 1, with the conveyors shown in a folded state;
Figure 3 is a perspective view of the conveyor shown in Figure 1, the conveyor being shown in the deployed state;
Figure 4 is a perspective view of the conveyor shown in Figure 1, the conveyor being shown in an intermediate state between the deployed and folded states;
Figure 5 is a perspective view of the conveyor shown in Figure 1, the conveyor being shown in the folded state;
Figure 6 is a side view of the conveyor shown in Figure 1, the conveyor being shown in the deployed state;
Figure 7 is a side view of the conveyor shown in Figure 1, the conveyor being shown in the intermediate state;
Figure 8 is a side view of the conveyor shown in Figure 1, the conveyor being shown in the folded state;
Figure 9 is a detail side view of an interface between first and second sections of the conveyor of Figure 1;
Figure 10 is a detail side view of an interface between second and third sections of the conveyor of Figure 1; and
Figure 11 is a detail side view of an interface between third and fourth sections of the conveyor of Figure 1.

### DETAILED DESCRIPTION OF THE DRAWINGS

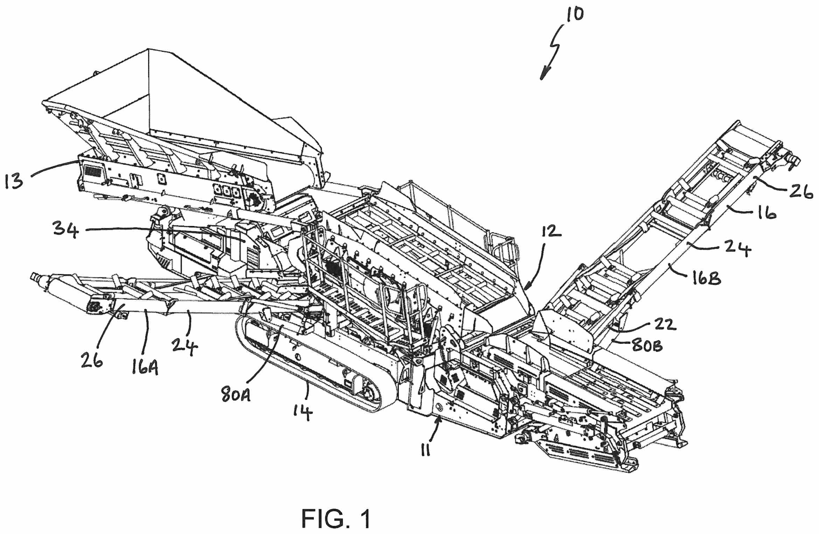

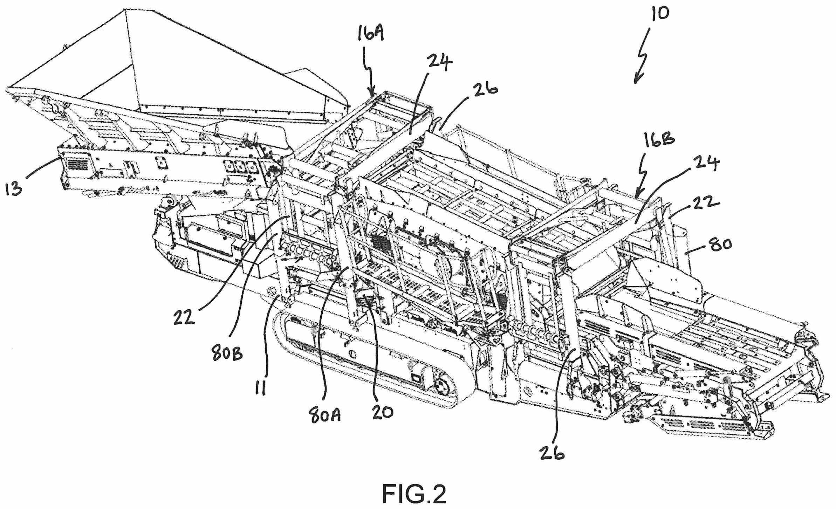

Referring now to Figures 1 and 2 of the drawings there is shown, generally indicated as 10, a material processing apparatus embodying one aspect of the invention. Depending on the embodiment, the apparatus 10 may be configured to perform any one or more of a plurality of processes, such as feeding, conveying, screening, separating, crushing, breaking, recycling, shredding, demolition and/or washing, on one or more types of aggregate or other material, for example rocks, stones, gravel, sand and/or soil, or any other material, especially but not exclusively, material that is quarried, mined, excavated or requires breaking, recycling or sorting. To this end, the apparatus 10 typically includes one or more material processing unit 12 configured to perform one or more of the foregoing processes. In the illustrated embodiment, the material processing unit 12 is a screening apparatus, usually referred to as a screen or screen box. It will be understood that the invention is not limited to use with screening apparatus and may be employed with other types of material processing unit, e.g. crushers, conveyors and so on. Moreover, the invention is not limited to use with material processing apparatus and may be used with other apparatus, e.g. machines, vehicle or plant, in particular machines, vehicles or plant that include conveyor(s), or stand-alone conveyor apparatus, e.g. comprising one or more conveyor mounted on a chassis or other support structure.

The apparatus 10 comprises a body or chassis 11 that carries the (or each) material processing unit 12. The chassis 11 may also carry or support one or more other components that facilitate use of the processing unit 12 and/or the apparatus 10 as a whole, e.g. conveyor(s), feeder(s), actuator(s) and power system(s), examples of which are described in more detail hereinafter. In typical embodiments, the apparatus 10 includes an internal combustion engine (ICE) 34, typically a diesel engine for providing power to the apparatus 10. The engine 34 may be mounted on the chassis in any conventional manner. The apparatus 10 typically includes a hydraulic system comprising one or more hydraulic actuator and/or one or more hydraulic motor for powering and/or operating components of the apparatus 10 as applicable. The hydraulic system may include other hydraulic circuitry and components, e.g. valve(s), pump(s), reservoir(s) and so on, as required by the embodiment. The hydraulic system may be powered by the ICE 34 (e.g. mechanically or electrically via a generator) and/or by any other available power source, e.g. from one or more battery pack(s) included in an electrical power system. The apparatus 10 may include a feeder unit 13, or hopper, for delivering material directly or indirectly to the material processing unit 12. In typical embodiments, the apparatus 10 is mobile and includes ground-engaging wheel(s) and/or track(s) 14 for this purpose.

The apparatus 10 typically includes at least one conveyor 16 for receiving material processed by the processing unit 12 and outputting the received material from the apparatus 10, e.g. to a stockpile, or to another machine or apparatus. Such conveyors 16 are sometimes referred to as outfeed or discharge conveyors. In the illustrated embodiment, the apparatus 10 includes first and second side conveyors 16A, 16B, located at respective sides of the apparatus 10. Each conveyor 16A, 16B embodies an aspect of the present invention as is described in more detail hereinafter, and may be described as a folding conveyor. In alternative embodiments, there may be more or fewer conveyors 16, each conveyor being provided in any suitable location, typically at a side, the front or the rear or the apparatus 10, and any of which may embody the present invention.

Each conveyor 16A, 16B is operable between a deployed state, which is shown in Figure 1 and which may also be referred to as an unfolded state, and a non-deployed, or folded, state, which is shown in Figure 2. In the deployed state, each conveyor 16A, 16B projects outwardly from the chassis, or main body of the apparatus 10, and is ready for use. In the folded state, each conveyor 16A, 16B is folded against the main body of the apparatus 10, which facilitates transport of the apparatus 10. In preferred embodiments, the arrangement is such that, in the folded state, each conveyor 16A, 16B wraps around the main body of the apparatus 10.

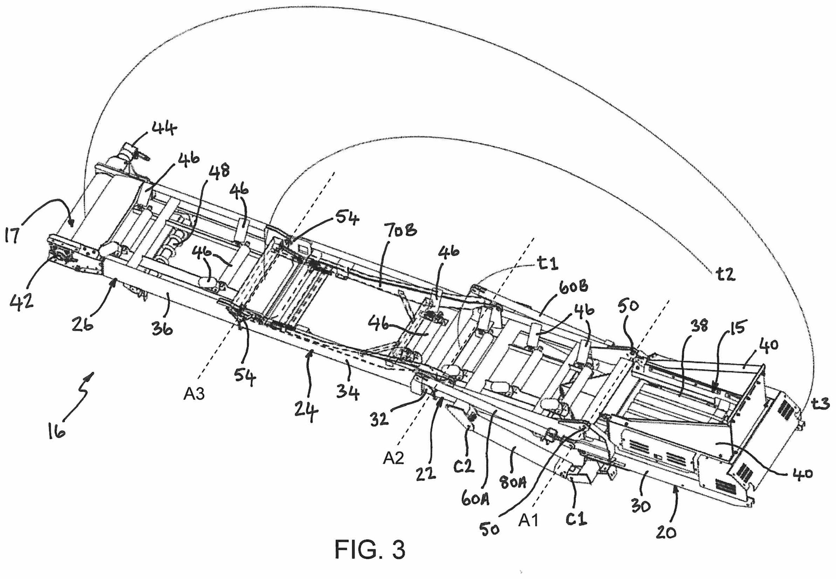

Referring now also to Figures 3 to 8, a preferred embodiment of the conveyor 16 is described. The conveyor 16 comprises a plurality of conveyor sections that are articulated to allow the conveyor 16 to be folded and unfolded, as applicable, between the deployed and folded states. In preferred embodiments, the conveyor 16 comprises a base (or tail) section 20, a first folding section 22, a second, or middle, folding section 24 and a third, or head, folding section 26. In alternative embodiments, the conveyor may comprise more or fewer folding sections. Typically the conveyor comprises a base section and at least two folding sections (i.e. a head section and at least one intermediate section), the sections typically being connected end-to-end, or in series or sequence, to form the conveyor.

The conveyor 16 includes means for conveying material from a feed end 15 of the conveyor 16 to a discharge end 17. In preferred embodiments, the conveying means comprises a closed loop conveyor belt (not shown) and as such the conveyor 16 may be referred to as a belt conveyor. The conveyor sections 20, 22, 24, 26 together provide a support structure for the conveyor belt (or other conveying means as applicable).

Each conveyor section 20, 22, 24, 26 may be configured in any conventional manner to support the conveying means and/or operation of the conveyor 16. Each conveyor section 20, 22, 24, 26 typically comprises a frame 30, 32, 34, 36 (or other support structure, e.g. one or more beam) for supporting the conveying means, and may include one or more other conveyor component(s) (e.g. roller(s), idler(s), pulley(s) and/or motor(s) as required) for supporting the conveying means and/or operation of the conveyor. The preferred arrangement is such that the roller(s) and/or idler(s) are located within the boundary of the respective frame, in particular such that the roller(s) and/or idler(s) do not extend laterally beyond the respective frame, i.e. in a direction parallel with the respective pivot axis. The frame, or other support structure, is rigid or substantially rigid and may be formed from any suitable material, typically steel or other metal(s). In typical embodiments, each frame 30, 32, 34, 36 is rectangular, or substantially rectangular, in shape.

The base conveyor section 20, which provides the feed end 15 of the conveyor 16, typically includes a pulley (not visible) around which the conveyor belt passes. The pulley of the base section 20 is typically an idler pulley but may alternatively be a driven pulley. The base section 20 may include an impact bed 38 and/or loading skirt(s) 40 to facilitate material being deposited onto the feed end 15 in use.

The head section 26, which provides the discharge end 17 of the conveyor 16, typically includes a pulley 42 around which the conveyor belt passes. The pulley 42 is typically a driven pulley, and to this end, the head section 26 may include a drive motor 44 coupled to the pulley 42. The drive motor 44 may be of any suitable conventional type, e.g. a hydraulic motor or an electric motor, and may be powered by the hydraulic system or electrical system as applicable. In alternative embodiments, the pulley 42 may be an idler pulley. The head section 26 may also include roller(s), or idler(s), to facilitate operation of the conveyor belt. In the illustrated embodiment, the head section 26 includes carrying idlers 46, preferably comprising troughing idlers, for supporting the conveyor belt as carries material from the feed end 15 to the discharge end 17. The illustrated head section 26 includes a return idler 48 for supporting the return section of the belt.

In typical embodiments, the first section 22 and the middle section 24 include carrying idler(s) 46, preferably comprising troughing idlers, for supporting the conveyor belt as carries material from the feed end 15 to the discharge end 17, and/or return idler(s) 48 for supporting the return section of the belt.

The conveyor sections 20, 22, 24, 26 are connected together, end-to-end, to form the conveyor 16, more particularly to form the support structure for the conveyor belt in preferred embodiments. In the illustrated embodiment, one end of the first foldable conveyor section 22 is connected to an end of the base section 20, the opposite end of the first folding conveyor section 22 being connected to one end of the middle folding conveyor section 24. The opposite end of the middle folding conveyor section 24 is connected to one end of the head conveyor section 26. The opposite end of the head conveyor section 26 serves as the discharge end 17 of the conveyor 16. The arrangement is such that, in use when the conveyor 16 is in its deployed state, material deposited onto the feed end 15 of the conveyor 16, i.e. onto the base section 20, is conveyed to the discharge end 17 along the first, middle and head conveyor sections 22, 24, 26 in sequence. As such, the first conveyor section 22 and middle conveyor section 24 may be referred to as intermediate conveyor sections as they are located between the base section 20 and the head section 26.

Each conveyor section 20, 22, 24, 26 has an end-to-end axis that is typically linear, or straight. In preferred embodiments, when the conveyor 16 is in its deployed state, the respective end-to-end axis of the conveyor sections 20, 22, 24, 26 may be aligned with each other, and also with the end-to-end axis of the conveyor 16 (which may be referred to as the longitudinal axis of the conveyor 16 and which corresponds to the direction in which material is conveyed, in use, from the feed end 15 to the discharge end 17). The conveyor sections may be coplanar or substantially coplanar in the deployed state. In preferred embodiments, the end-to-end, or longitudinal, axis of the conveyor 16 (and therefore the conveyor 16 itself), when in the deployed state, is linear or substantially linear, i.e. straight or substantially straight. However, in some embodiments, the longitudinal axis, and therefore the conveyor 16 itself, may be curved or otherwise be non-linear in the deployed state. For example, the conveyor 16 may be curved, when in the deployed state, under the influence of gravity (which may depend on the length of the conveyor 16). Alternatively, or in addition, one or more of the conveyor sections 20, 22, 24, 26, may be obliquely disposed with respect to one or more adjacent conveyor section in the deployed state such that the longitudinal axis of the conveyor 16 is non-linear in the deployed state. For example, the first conveyor section 22 may be obliquely disposed with respect to the base section 20 in the deployed state (e.g. such that the angle of inclination of the base section 20 with respect to a notional horizontal reference plane is shallower, or less than, the angle of inclination of the first section 22 with respect to the notional horizontal reference plane). In any event, in the deployed state, the conveyor sections are arranged to provide a path between the feed end 15 and discharge end 17 along which material can be conveyed, which usually involves an arrangement whereby the conveyor sections are coplanar or substantially coplanar, or otherwise have relative angular dispositions that facilitate conveying material from the feed end 15 to the discharge end 17. In contrast, in the folded state, the folded conveyor sections have different relative angular dispositions that typically prevent conveying material from the feed end 15 to the discharge end 17, and are usually non-coplanar with each other.

The conveyor sections 20, 22, 24, 26 are pivotably interconnected to allow each conveyor section 20, 22, 24, 26 to pivot about a respective pivot axis A1, A2, A3 with respect to the, or each, other conveyor section to which it is connected. In particular: the first conveyor section 22 is pivotably connected to the base section 20 to allow relative pivoting movement between the sections 20, 22 about axis A1; the first conveyor section 22 is pivotably connected to the middle conveyor section 24 to allow relative pivoting movement between the sections 22, 24 about axis A2; and the middle conveyor section 24 is pivotably connected to the head conveyor section 26 to allow relative pivoting movement between the sections 24, 26 about axis A3. The pivot axes A1, A2, A3 are parallel with each other. Each pivot axis A1, A2, A3 is perpendicular to the end-to-end axes of the conveyor sections 20, 22, 24, 26. Each pivot axis A1, A2, A3 is perpendicular to the end-to-end, or longitudinal, axis of the conveyor 16 when in the deployed state. In preferred embodiments, each pivot axis A1, A2, A3 extends transversely across the conveyor 16 or with respect to the respective conveyor section(s).

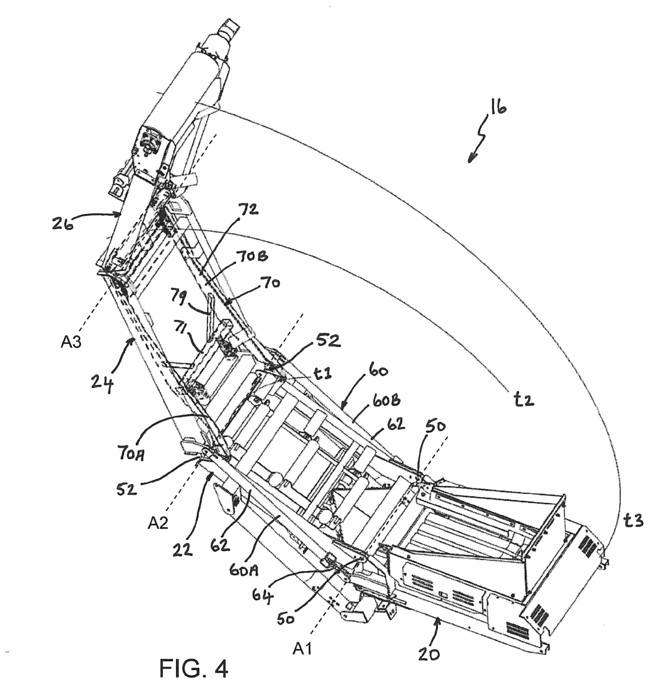

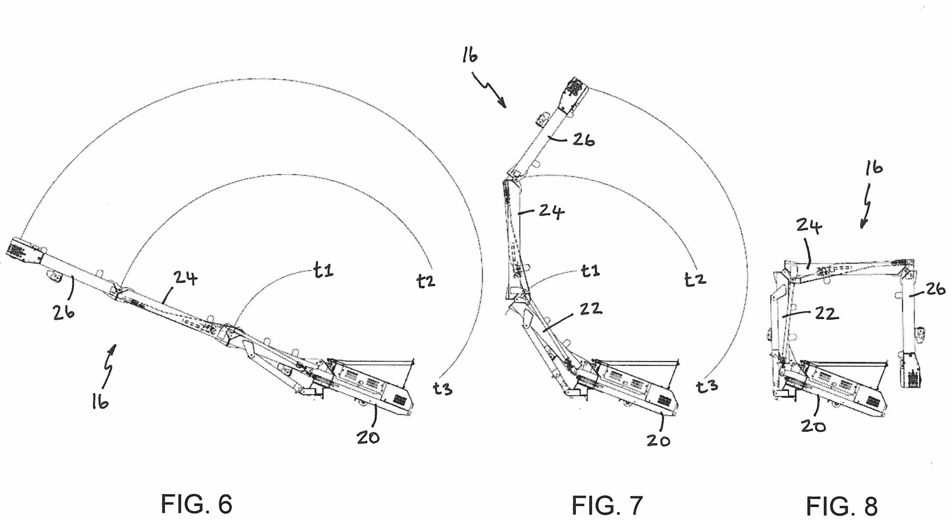

The pivotable connections between the conveyor sections 20, 22, 24, 26 allows the conveyor 16 to fold and unfold between the deployed state shown in Figures 1, 3 and 6 and the folded state shown in Figures 2, 5 and 8, via the exemplary intermediate state shown in Figures 4 and 7. In Figures 3, 4, 6 and 7, trace lines t1, t2 and t3 illustrate the path along which the end of the respective conveyor section 22, 24, 26 moves during folding and unfolding. The conveyor sections 20, 22, 24, 26 may be said to be arranged in series, with the base section 20 being the innermost section in the series and the head section 26 being the outermost section in the series. The preferred arrangement is such that, during folding of the conveyor 16, each folding conveyor section 22, 24, 26 pivots with respect to the respective adjacent inwardly located conveyor section 20, 22, 24 in the same angular direction (i.e. clockwise as viewed in Figures 3 to 8) as each other. This arrangement has the effect of causing the conveyor 16 to furl when folding from the deployed state to the folded state. Similarly, the preferred arrangement is such that, during unfolding of the conveyor 16, each folding conveyor section 22, 24, 26 pivots with respect to the respective adjacent inwardly located conveyor section 20, 22, 24 in the same angular direction (i.e. anticlockwise as viewed in Figures 3 to 8) as each other (and in the opposite angular direction to the folding movement). This arrangement has the effect of causing the conveyor 16 to unfurl when unfolding from the folded state to the deployed state. The ability of the conveyor 16 to furl and unfurl allows it to wrap and unwrap around the main body of the apparatus 10 as illustrated in Figures 1 and 2, or to wrap and unwrap around any other apparatus or machine with which it is used. The respective length of each folding conveyor section 22, 24, 26 may be selected to suit the dimensions of the apparatus around which the conveyor 16 is intended to wrap and unwrap, as applicable. In the embodiment of Figures 1 and 2, the base section 20 is incorporated into the apparatus 10 at a location where material that has been processed by the material processing unit 12 (and/or other part of the apparatus 10 as applicable) may be directly or indirectly be deposited on the feed end 15, whereupon the material is conveyed to the discharge end 17. In this example, the length of each folding conveyor section 22, 24, 26 is selected to allow the conveyor 16, when in the folded state, to extend, from the base section 20, upwardly along a first side of the apparatus 10, over the top of the apparatus 10 and downwardly along the opposite side of the apparatus 10. In the illustrated embodiment, conveyor 16 is straight in its deployed state and extends from the body of the apparatus 10 obliquely with respect to the transverse axis of the body. To this end, the base section 20 may be incorporated into the apparatus 10 such that its longitudinal axis is oblique with respect to the transverse axis of the body.

The respective pivotable connection between the respective conveyor sections 20, 22, 24, 26 may take any suitable conventional form, typically comprising one or more respective hinge or other pivot joint(s). In the illustrated embodiment, the first conveyor section 22 is connected to the base section 20 by transversely spaced-apart pivot joints 50 (which together may be said to comprise a hinge) configured to allow relative pivoting movement between the base section 20 and the first conveyor section 22 about axis A1, and in particular to allow the first conveyor section 22 to pivot with respect to the base section 20 in a first angular direction (clockwise as viewed in Figures 3 to 8) during folding of the conveyor 16, and in the opposite angular direction (anticlockwise as viewed in Figures 3 to 8) during unfolding of the conveyor 16. The middle conveyor section 24 is connected to the first conveyor section 22 by transversely spaced-apart pivot joints 52 (which together may be said to comprise a hinge) configured to allow relative pivoting movement between the middle conveyor section 24 and the first conveyor section 22 about axis A2, and in particular to allow the middle conveyor section 24 to pivot with respect to the first conveyor section 22 in the first angular direction (clockwise as viewed in Figures 3 to 8) during folding of the conveyor 16, and in the opposite angular direction (anticlockwise as viewed in Figures 3 to 8) during unfolding of the conveyor 16. The head conveyor section 26 is connected to the middle conveyor section 24 by transversely spaced-apart pivot joints 54 (which together may be said to comprise a hinge) configured to allow relative pivoting movement between the head conveyor section 26 and the middle conveyor section 24 about axis A3, and in particular to allow the head conveyor section 26 to pivot with respect to the middle conveyor section 24 in the first angular direction (clockwise as viewed in Figures 3 to 8) during folding of the conveyor 16, and in the opposite angular direction (anticlockwise as viewed in Figures 3 to 8) during unfolding of the conveyor 16. In preferred embodiments, the pivotable connections are configured to constrain the pivoting movement to the respective pivot axis A1, A2, A3.

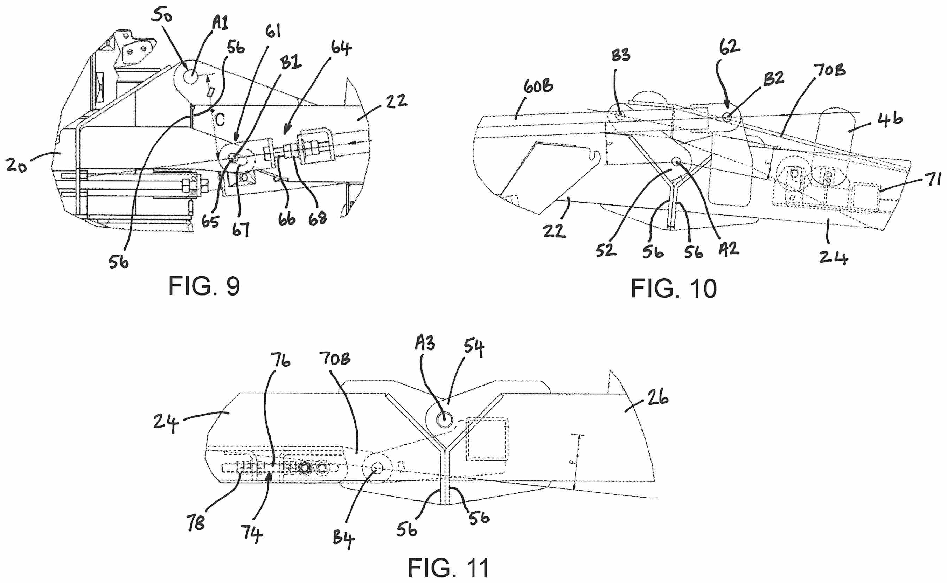

In preferred embodiments, the respective pivotable connection between the respective conveyor sections 20, 22, 24, 26 is configured to constrain, or limit, pivoting movement in the angular direction (i.e. anticlockwise as viewed in Figures 3 to 8) corresponding to unfolding of the conveyor 16 in order to stop pivoting movement of the respective conveyor sections 22, 24, 26 when the deployed state of the conveyor 16 is reached. To this end, the respective pivotable connection may include, or be cooperable with, one or more stop. In the illustrated embodiment, and as can best be seen in Figures 9 to 11, the respective adjacent ends of adjacent conveyor sections 20, 22, 24, 26 are provided with at least one respective stop formation 56 that abuts with the respective stop formation 56 of the adjacent conveyor section 20, 22, 24, 26 to stop pivoting movement of the respective conveyor section(s) in the unfolding angular direction when the deployed state is reached.

In preferred embodiments, the arrangement is such that the folding conveyor sections 22, 24, 26 pivot upwardly out of the deployed state when the conveyor 16 is being folded, and downwardly into the deployed state when the conveyor 16 is being unfolded.

In preferred embodiments, the base section 20 and middle conveyor section 24 are interconnected by at least one mechanical link or linkage 60, typically comprising one or more bar or rod. In preferred embodiments, the base section 20 and middle conveyor section 24 are interconnected by first and second links 60A, 60B, which may be said to comprise a linkage. The links 60A, 60B are spaced apart in the transverse direction of the conveyor 16, conveniently being located at a respective side of the conveyor 16, and preferably being parallel, or substantially parallel, with each other. The first and second links 60A, 60B and their respective couplings are preferably the same as each other. Preferably, the first and second links 60A, 60B are symmetrically located with respect to the longitudinal axis of the conveyor 16. In alternative embodiments (not illustrated), there may be a single link (preferably in register with the longitudinal axis of the conveyor 16), or more than two links. Each link 60A, 60B may comprise a bar, rod or other rigid, or substantially rigid, structure 62, which may be formed from any suitable material such as steel or other metal. Each link 60A, 60B, or at least the respective structure 62, is preferably straight, but may alternatively take other shapes, e.g. curved or angled or otherwise be non-linear. In preferred embodiments, the links 60A, 60B, or at least the respective structures 62, have the same shape and size as each other. Each link 60A, 60B has a length that is fixed, or is fixable such that the length is fixed during folding and unfolding of the conveyor 16. In preferred embodiments, each link 60A, 60B includes a length-adjusting mechanism 64 that allows the length of the respective link 60A, 60B to be adjusted, e.g. during set up or maintenance, to allow the conveyor 16 to be tuned for correct folding and unfolding as described herein. The length-adjusting mechanism 64 may take any suitable form, e.g. comprising an extension member 66 (e.g. a pin, rod or bolt) that is extendible with respect to the main structure 62 of the link 60A, 60B, e.g. telescopically and/or by a threaded connection to the structure 62, and that is lockable in a selected state of extension by a locking device, such as one or more nut 68 or pin. The respective link structure 62 is preferably of fixed length. Each link 60A, 60B is conveniently located outside (at least laterally) of the conveyor 16, and in the illustrated embodiment extends from the base section 20 to the middle section 24 outside of the first section 22. In alternative embodiments, one or both link 60A, 60B may located within, or at least partially within, the lateral boundary of the conveyor 16. In preferred embodiments, the links 60A, 60B are independent of each other, but may alternatively be interconnected, e.g. by one or more cross bar.

Each link 60A, 60B is pivotably coupled, conveniently at a respective end, to the base section 20 and to the middle conveyor section 24 for pivoting movement about a respective pivot axis B1, B2 (see in particular Figures 9 to 11) that extends transversely of the conveyor 16, and which is parallel with pivot axes A1, A2, A3. The respective pivotable coupling 61, 63 between each link 60A, 60B and the respective conveyor section 20, 24 may take any suitable conventional form, typically comprising one or more respective hinge or other pivot joint, e.g. comprising a pivot 65 located in a journal bearing 67 (the respective pivot 65 may be provided on either one of the respective conveyor section 20, 24 or respective link 60A, 60B, with the respective journal bearing 67 being provided on the respective other one of the respective conveyor section 20, 24 or respective link 60A, 60B, as is convenient). In preferred embodiments, pivot axis B1 is spaced apart from pivot axis A1 at least in a direction that is perpendicular to both the longitudinal and transverse axes of the conveyor 16, which corresponds to being located above or below the pivot axis A1 when the conveyor 16 is in use. In the illustrated embodiment, the arrangement is such that pivot axis B1 is located below pivot axis A1 in use. Pivot axis B1 may also be spaced apart from pivot axis A1 in the longitudinal direction, as is the case in the illustrated embodiment in which pivot axis B1 is located forwardly of pivot axis A1 (wherein the forward direction corresponds to the direction in which the conveyor 16 conveys material during use). In preferred embodiments, pivot axis B2 is spaced apart from pivot axis A2 at least in a direction that is perpendicular to both the longitudinal and transverse axes of the conveyor 16, which corresponds to being located above or below the pivot axis A2 when the conveyor 16 is in use. In the illustrated embodiment, the arrangement is such that pivot axis B2 is located above pivot axis A2 in use. Pivot axis B1 is typically located forwardly of pivot axis A2 in the longitudinal direction, as is the case in the illustrated embodiment.

As described above, in preferred embodiments, each link 60A, 60B has one end pivotably coupled to the base section 20. This preferred arrangement facilitates installation of the conveyor 16 on the apparatus 10 or other machine as a modular unit. In alternative embodiments, instead of being coupled to the base section 20, each link 60A, 60B, typically the respective end of each link 60A, 60B, is pivotably coupled, in use, to any other convenient object that may serve as a base, or base structure, (instead of the base section 20) such that the conveyor 16 operates as described herein. For example, the respective link 60A, 60B may be pivotably coupled to the chassis 11 or other convenient part of the apparatus 10, or other machine or plant, on which the conveyor 16 is mounted or installed in use (or to a ground surface or ground structure), in particular at a location that is beside, below or otherwise adjacent the base section 20 and which facilitates operation of the conveyor 16 as described herein.

The preferred arrangement is such that, during folding and unfolding of the conveyor 16, in response to pivoting movement of the first conveyor section 22 about pivot axis A1, each link 60A, 60B exerts a force on the middle conveyor section 24 that causes the middle conveyor section 24 to pivot about pivot axis A2. In particular, each link 60A, 60B exerts a force on the middle conveyor section 24 at location that is spaced apart from the pivot axis A2 (i.e. at the location of the pivot axis B2) and which therefore causes the middle conveyor section 24 to pivot about pivot axis A2. In the illustrated embodiment, pivot axis B2 is located above pivot axis A2 and as such each link 60A, 60B exerts a pulling force on the middle conveyor section 24 to cause it to pivot about axis A2 during folding, and a pushing force during unfolding. In alternative embodiments, the arrangement may be such that pivot axis B2 is located below pivot axis A2 and as such each link 60A, 60B exerts a pushing force on the middle conveyor section 24 to cause it to pivot about axis A2 during folding, and a pulling force during unfolding. In such alternative embodiments, the preferred arrangement is such that the pivot axis B1 is above the pivot axis A1 to facilitate the pushing/pulling action of the links 60A, 60B. More generally, in preferred embodiments, each link 60A, 60B extends obliquely with respect to the longitudinal axis of the first conveyor section 22 and/or passes through the plane in which both of the pivot axes A1, A2 lie. In preferred embodiments, the links 60A, 60B are symmetrically arranged on the conveyor 16.

The first conveyor section 22 and head conveyor section 26 are interconnected by at least one mechanical link or linkage 70, typically comprising one or more bar or rod. In preferred embodiments, the first section 22 and head conveyor section 26 are interconnected by first and second links 70A, 70B, which may be said to comprise a linkage. The links 70A, 70B are spaced apart in the transverse direction of the conveyor 16, conveniently being located at a respective side of the conveyor 16, and preferably being parallel, or substantially parallel, with each other. Preferably, the first and second links 70A, 70B are symmetrically located with respect to the longitudinal axis of the conveyor 16. In alternative embodiments (not illustrated), there may be a single link (preferably in register with the longitudinal axis of the conveyor 16), or more than two links. Each link 70A, 70B may comprise a bar, rod or other rigid, or substantially rigid, structure 72, which may be formed from any suitable material such as steel or other metal. Each link 70A, 70B, or at least the respective structure 72, may be straight or may take other shapes, e.g. curved or angled or otherwise be non-linear. In preferred embodiments, the links 70A, 70B, or at least the respective structures 72, have the same shape and size as each other. Each link 70A, 70B has a length that is fixed, or is fixable such that the length is fixed during folding and unfolding of the conveyor 16. In preferred embodiments, each link 70A, 70B includes a length-adjusting mechanism 74 that allows the length of the respective link 70A, 70B to be adjusted, e.g. during set up or maintenance, to allow the conveyor 16 to be tuned for correct folding and unfolding as described herein. The length-adjusting mechanism 74 may take any suitable form, e.g. comprising an extension member 76 (e.g. a pin, rod or bolt) that is extendible with respect to the main structure 72 of the link 70A, 70B, e.g. telescopically and/or by a threaded connection to the structure 72, and that is lockable in a selected state of extension by a locking device, such as one or more nut 78 or pin. The respective link structure 72 is preferably of fixed length. Each link 70A, 70B is conveniently located inside the lateral boundary of the conveyor 16, and in the illustrated embodiment extends from the first section 22 to the head section 26 within the lateral boundary of the middle section 24. This arrangement allows the conveyor 16 to be relatively compact laterally in the region of the middle section 24. In alternative embodiments, one or both link 70A, 70B may located outside of, or at least partially outside of, the lateral boundary of the conveyor 16. In preferred embodiments, the links 70A, 70B are interconnected, e.g. by one or more cross bar 71 and/or stiffening structure 79, and may be part of a frame that links the first conveyor section 22 and head conveyor section 26. Advantageously, the links 70A, 70B, or cross bar 71 or more generally the frame of which they are part, carries troughing idlers 46. In alternative embodiments, the links 70A, 70B may be independent of each other, i.e. not interconnected.

Each link 70A, 70B is pivotably coupled, conveniently at a respective end, to the first conveyor section 22 and to the head conveyor section 26 for pivoting movement about a respective pivot axis B3, B4 (see in particular Figures 6 to 8) that extends transversely of the conveyor 16, and which is parallel with pivot axes A1, A2, A3. The respective pivotable coupling 71, 73 between each link 70A, 70B and the respective conveyor section 22, 26 may take any suitable conventional form, typically comprising one or more respective hinge or other pivot joint, e.g. comprising a pivot located in a journal bearing. In preferred embodiments, pivot axis B3 is spaced apart from pivot axis A2 at least in a direction that is perpendicular to both the longitudinal and transverse axes of the conveyor 16, which corresponds to being located above or below the pivot axis A2 when the conveyor 16 is in use. In the illustrated embodiment, the arrangement is such that pivot axis B3 is located above pivot axis A2 in use. Pivot axis B3 may also be spaced apart from pivot axis A2 in the longitudinal direction, as is the case in the illustrated embodiment in which pivot axis B3 is located rearwardly of pivot axis A2. In preferred embodiments, pivot axis B4 is spaced apart from pivot axis A3 at least in a direction that is perpendicular to both the longitudinal and transverse axes of the conveyor 16, which corresponds to being located above or below the pivot axis A3 when the conveyor 16 is in use. In the illustrated embodiment, the arrangement is such that pivot axis B4 is located below pivot axis A3 in use. Pivot axis B3 is typically located rearwardly of pivot axis A3 in the longitudinal direction, as is the case in the illustrated embodiment.

The preferred arrangement is such that, during folding and unfolding of the conveyor 16, in response to pivoting movement of the middle conveyor section 24 about pivot axis A2 (which in preferred embodiments is caused by the action of the links 60A, 60B as the first conveyor section 22 pivots about axis A1), each link 70A, 70B exerts a force on the head conveyor section 26 that causes the head conveyor section 26 to pivot about pivot axis A3. In particular, each link 70A, 70B exerts a force on the head conveyor section 26 at location that is spaced apart from the pivot axis A3 (i.e. at the location of the pivot axis B4) and which therefore causes the head conveyor section 26 to pivot about pivot axis A3. In the illustrated embodiment, pivot axis B4 is located below pivot axis A3 and as such each link 70A, 70B exerts a pushing force on the head conveyor section 26 to cause it to pivot about axis A3 during folding, and a pulling force during unfolding. In alternative embodiments, the arrangement may be such that pivot axis B4 is located above pivot axis A3 and as such each link 70A, 70B exerts a pulling force on the head conveyor section 26 to cause it to pivot about axis A3 during folding, and a pushing force during unfolding. In such alternative embodiments, the preferred arrangement is such that the pivot axis B3 is below the pivot axis A2 to facilitate the pushing/pulling action of the links 70A, 70B.

More generally, in preferred embodiments, each link 70A, 70B extends obliquely with respect to the longitudinal axis of the middle conveyor section 24 and/or passes through the plane in which both of the pivot axes A2, A3 lie. In preferred embodiments, the links 70A, 70B are symmetrically arranged on the conveyor 16.

The conveyor 16 includes, or is co-operable with, actuating means, typically powered actuating means, for operating the conveyor 16 between the deployed and folded states. The actuation means typically comprises one or more powered actuator, e.g. one or more hydraulically powered actuator, and/or one or more electrically powered actuator, and/or one or more pneumatically powered actuator. The actuator(s) may be powered in use by the hydraulic system or electrical system of the apparatus 10 as applicable, or by an external hydraulic or electric power system (e.g. in embodiments in which the actuating means is provided separately from the conveyor 16) or in alternative embodiments by a pneumatic power system. In preferred embodiments, the, or each, actuator is a linear actuator (e.g. a hydraulic ram, pneumatic ram or electric linear actuator), but may take any other convenient conventional form, e,g, linear ball screw or linear belt actuator(s), rack & pinion actuator(s), jack screw actuator(s), cable & pulley actuator(s), and so on. Advantageously, the actuation means only acts on one of the folding conveyor sections 22, 24, 26 in order to operate the conveyor 16 between the deployed and folded states. Advantageously, the actuating means may comprise a single actuator, or a single set of actuators (e.g. a set of two or more actuators configured to act in unison). In preferred embodiments, the actuating means is arranged to act on the first conveyor section 22 in order to cause the first conveyor section 22 to pivot about axis A1. To this end, the actuating means is preferably coupled between the base section 20 and the first conveyor section 22, although in other embodiments the actuating means may be coupled between the base section 20 and any one of the folding conveyor sections 22, 24, 26. Alternatively, the actuating means may be coupled, in use, between the first conveyor section 22 (or other folding conveyor section 24, 26 as applicable) and any object that may serve as a base, or base structure, (instead of the base section 20), or ground, for the actuating means to allow it to operate the conveyor 16 as described herein. For example, the actuating means may be coupled between the first conveyor section 22 (or other foldable conveyor section 24, 26 as applicable) and the chassis 11 or other convenient part of the apparatus 10, or other machine or plant, on which the conveyor 16 is mounted or installed in use (or to a ground surface or ground structure), for example at a location that is beside, below or otherwise adjacent the base section 20 and which facilitates operation of the conveyor 16 as described herein. Alternatively still, the actuating means may be coupled between any two of the folding conveyor sections 22, 24, 26 to operate the conveyor 16 as described herein. In preferred embodiments, the actuating means is provided as an integral part of the conveyor 16. In alternative embodiments, the actuating means may be separate from the conveyor, i.e. not part of the conveyor 16, and may be provided and coupled to the conveyor 16 as required for use.

In the illustrated embodiment, the actuating means comprises first and second actuators 80A, 80B (which may be regarded as a set of two actuators acting in unison). The actuators 80A, 80B are coupled between the base section 20 and the first conveyor section 22. The actuators 80A, 80B are spaced apart in the transverse direction of the conveyor 16, conveniently being located at a respective side of the conveyor 16, and preferably being parallel, or substantially parallel, with each other. Preferably, the first and second actuators 80A, 80B are symmetrically located with respect to the longitudinal axis of the conveyor 16. In alternative embodiments (not illustrated), there may be a single actuator (preferably in register with the longitudinal axis of the conveyor 16), or more than two actuators. Each actuator 80A, 80B preferably comprises a linear actuator (e.g. a hydraulic actuator or electric actuator, which are contained within a telescopic housing in the illustrated embodiment), the arrangement being such that the conveyor 16 can be operated between the deployed and folded states by extension and retraction of the actuators 80A, 80B.

Preferably, each actuator 80A, 80B is pivotably coupled, conveniently at a respective end, to the base section 20 and to the first conveyor section 22 for pivoting movement about a respective pivot axis C1, C2 that extends transversely of the conveyor 16, and which is parallel with pivot axes A1, A2, A3. The respective pivotable coupling between each actuator 80A, 80B and the respective conveyor section 20, 22 may take any suitable conventional form, typically comprising one or more respective hinge or other pivot joint. In preferred embodiments, pivot axis C1 is spaced apart from pivot axis A1 at least in a direction that is perpendicular to both the longitudinal and transverse axes of the conveyor 16, which corresponds to being located above or below the pivot axis A1 when the conveyor 16 is in use. In the illustrated embodiment, the arrangement is such that pivot axis C1 is located below pivot axis A1 in use. As extension of each actuator 80A, 80B exerts a pushing force on the first conveyor section 22 to cause it to pivot about axis A1 (upwardly or anticlockwise as viewed in Figures 3 to 8) in order to fold the conveyor 16, while retraction of each actuator 80A, 80B exerts a pulling force on the first conveyor section 22 to cause it to pivot about axis A1 (downwardly or clockwise as viewed in Figures 3 to 8) in order to unfold the conveyor 16. In alternative embodiments, the arrangement may be such that pivot axis C1 is located above pivot axis A1 and as such retraction of each actuator 80A, 80B causes the conveyor 16 to fold, while extension of the actuators causes the conveyor 16 to unfold.

In alternative embodiments (not illustrated) the actuators 80A, 80B may be coupled between the base section 20 and any one of the folding conveyor sections 22, 24, 26, or between the first conveyor section 22 (or other folding conveyor section 24, 26 as applicable) and any object that may serve as a base (instead of the base section 20), or ground, for the actuators 80A, 80B to allow them to operate the conveyor 16 as described herein. For example, each actuator 80A, 80B may be coupled between the first conveyor section 22 (or other foldable conveyor section 24, 26 as applicable) and the chassis 11 or other convenient part of the apparatus 10, or other machine or plant, on which the conveyor 16 is mounted or installed in use (or to a ground surface or ground structure), for example at a location that is beside, below or otherwise adjacent the base section 20 and which facilitates operation of the conveyor 16 as described herein. Alternatively still, the actuators 80A, 80B may be coupled between any two of the folding conveyor sections 22, 24, 26 to operate the conveyor 16 as described herein. In preferred embodiments, the actuators 80A, 80B are provided as an integral part of the conveyor 16. In alternative embodiments, the actuators 80A, 80B may be separate from the conveyor, i.e. not part of the conveyor 16, and may be provided and coupled to the conveyor 16 as required for use.

In preferred embodiments, when in the deployed state, the conveyor 16 is capable of limited pivoting movement about axis A1 without any folding/pivoting about axes A2 or A3 occurring (to allow adjustment of the working angle of the conveyor 16 when deployed). The preferred arrangement is such that, during the limited pivoting movement, the folding conveyor sections (i.e. the first section 20, the second section 22 and the third section 26 (if present)) do not pivot with respect to each other, i.e. they maintain their desired relative deployed state orientations, preferably pivoting in unison with each other about axis A1. To facilitate this, in preferred embodiments, the journal bearing 67 of the pivotable coupling 61 that couples the respective link 60A, 60B with respect to the base section 20 is configured (e.g. being slot-shaped, elongate or otherwise suitably shaped and dimensioned) to allow relative linear movement between the journal bearing 67 and the pivot 65. The configuration may be such that, with conveyor 16 in the deployed state and the pivot 65 located at one end of the journal bearing 67, during an initial phase of pivoting of the first conveyor section 22 about axis A1, the journal bearing 67 moves linearly, e.g. slides, with respect to the pivot 65 (or vice versa) with the result that the respective link 60A, 60B does not exert a pivoting force on the middle conveyor section 24. After the initial phase, the pivot 65 is located at the other end of the journal bearing 67, whereupon further pivoting of the first conveyor section 22 about axis A1 in the same direction causes the respective link 60A, 60B to exert a pivoting force on the middle conveyor section 24 as described above to cause folding/pivoting about axes A2 and A3. During the initial phase of pivoting, relative movement between the pivot 65 and bearing 67 allows corresponding movement between pivot points B1 and B2, but relative movement between B1 and B2 is not desirable during folding of the conveyor. In preferred embodiments therefore, after the initial phase of pivoting, further relative linear movement between the journal bearing 67 and the pivot 65 is prevented during further pivoting of the first conveyor section 22 about axis A1 in the same direction, i.e. during folding of the conveyor. This may be achieved by inter-engagement of mechanical stops, which may be provided on the link(s) 60A, 60B and base section 20 as required.

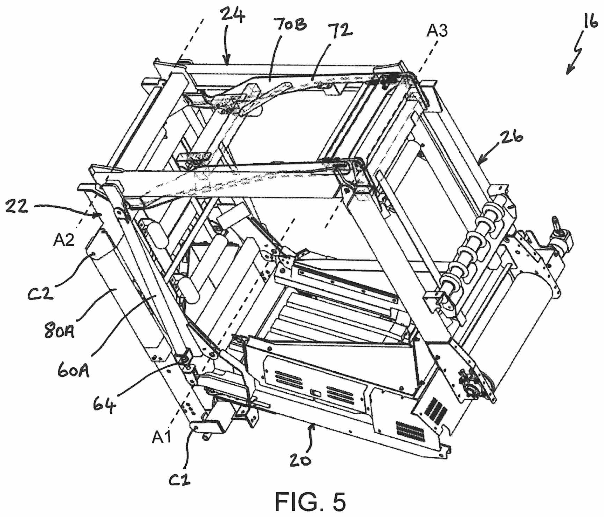

With reference in particular to Figures 3 to 8, in use of the illustrated embodiment, starting with the conveyor 16 in the deployed state (Figures 3 and 6), extension of the actuators 80A, 80B causes the first conveyor section 22 to pivot about axis A1 (anticlockwise as viewed in Figures 3 to 8) which (after the initial phase if applicable) in turn causes the links 60A, 60B to exert a pulling force on the middle conveyor section 24 causing it to pivot about axis A2 (anticlockwise as viewed in Figures 3 to 8). The pivoting of the middle conveyor section 24 causes the links 70A, 70B to exert a pushing force on the head conveyor section 26 causing it to pivot about axis A3 (anticlockwise as viewed in Figures 3 to 8). In this manner, the conveyor 16 is operated to adopt the folded state (Figures 5 and 8). Typically, the actuators 80A, 80B continue to extend until the conveyor 16 reaches the folded state, which optionally corresponds to maximum extension of the actuators 80A, 80B. To unfold the conveyor 16, retraction of the actuators 80A, 80B causes the first conveyor section 22 to pivot about axis A1 (clockwise as viewed in Figures 3 to 8) which in turn causes the links 60A, 60B to exert a pushing force on the middle conveyor section 24 causing it to pivot about axis A2 (clockwise as viewed in Figures 3 to 8). The pivoting of the middle conveyor section 24 causes the links 70A, 70B to exert a pulling force on the head conveyor section 26 causing it to pivot about axis A3 (clockwise as viewed in Figures 3 to 8). In this manner, the conveyor 16 is operated to adopt the deployed state. Typically, the actuators 80A, 80B continue to retract until the conveyor 16 reaches the deployed state, which optionally corresponds to maximum retraction of the actuators 80A, 80B. As described above, adoption of the deployed state is preferably facilitated by the stop formations 56. It will be understood that the respective pulling and pushing forces described herein depend not only on whether the conveyor 16 is folding or unfolding but also on the manner in which the respective links 60A, 60B, 70A, 70B are configured with respect to the conveyor sections, and that the conveyor may be configured such that the links 60A, 60B push or pull during folding, and pull or push during unfolding, as desired, and such that the links 70A, 70B push or pull during folding, and pull or push during unfolding, as desired.

In the illustrated embodiment, the conveyor 16 is straight, or substantially straight, in the deployed state and is furled in the folded state such that the conveyor 16 is able to be wrapped around the apparatus 10 on which it is installed. For example, the first section 22 may extend substantially vertically from the base section 20, the middle section 24 may be substantially perpendicularly disposed with respect to the first section 22, and the head section 26 may be substantially perpendicularly disposed with respect to the middle section 22. It will be understood that in alternative embodiments, the conveyor may take alternative configurations in the deployed and/or folded states to those illustrated and described herein, e.g. with regard to the relative angular disposition of the conveyor sections when folded or deployed. Typically, however, the arrangement is such that in the deployed state the or each folding conveyor section is unfolded (i.e. by pivoting) to adopt a relative angular disposition with respect to the or each adjacent conveyor section that increases the length of the conveyor (in particular the length in an axial direction that corresponds to the feed direction in use), whereas in the folded state the or each folding conveyor section is folded (i.e. by pivoting) to adopt a relative angular disposition with respect to the or each adjacent conveyor section that decreases the length of the conveyor (in particular the length in an axial direction that corresponds to the feed direction in use). In typical embodiments, each folding conveyor section folds in the same first angular direction (i.e. clockwise or anticlockwise) and unfolds in the same second direction (i.e. anticlockwise or clockwise) opposite to the first angular direction. In alternative embodiments (not illustrated), one or more of the conveyor sections may fold and unfold in the opposite angular direction in which one or more of the other conveyor sections folds and unfolds, respectively, i.e. it is not essential that all of the folding conveyor sections fold in the same angular direction and unfold in the same angular direction. In any event, the conveyor 16 is configured to operate between the desired deployed and folded states, which may vary from embodiment to embodiment, and the configuration may involve determining values for various parameters of the conveyor 16 as would be apparent to a skilled person including, by way of example, any one or more of: the locations of the pivot axes B1, B2, B3, B4 (in particular with respect to one or more of the pivot axes A1. A2, A3); the locations of pivot axes C1, C2; the extension range of the actuators 80A, 80B; the force exerted by the actuators 80A, 80B. The parameter values may depend on the values of other desired parameters of the conveyor 16 such as, the relative angles between the conveyor sections in the deployed and folded states, the lengths of the conveyor sections, the weight of the conveyor sections and so on. It is desirable to maximize the perpendicular distance between the line of action, or line of force, of the links 60A, 60B. 70A, 70B and the respective pivot axis A1, A2, A3 about which it acts, preferably throughout the entire duration of the respective folding motion. Such an arrangement minimises linkage loads, actuation loads and bearing loads. For example, with reference to Figure 9, it may be desired to maximise the perpendicular distance C between the line of force of links 60A, 60B and pivot axis A1 as this maximises the mechanical advantage of the applied force and reduces loads on pivots and links. It will be apparent that determining a maximum value for such distances may be dependent on any one or more of: the geometry of the conveyor; the folding angles; the overall size requirements of the conveyor; the travel length of the actuator(s); and the power of the actuator(s). In preferred embodiments, the arrangement is such that the line of action, or line of force, of each link 60A, 60B. 70A, 70B remains at the same side of the respective pivot axis A1, A2 A3 throughout the respective folding motion in order to prevent locking or inversion of the folding mechanism. Maintaining the link line of action/force at the same side of the relevant pivot axis may be achieved through manipulation of link to pivot geometry through entire range of folding motion. In particular, link location and orientation may be considered throughout the entire motion to ensure intended rotations are maintained, and preferably also to ensure that resulting linkage loads are achievable and sustainable. Design of the conveyor 16, including determining the relevant parameters, may be achieved in any conventional manner, e.g. by computer simulation and/or empirically.

In alternative embodiments (not illustrated) the middle conveyor section 24 may be omitted and the head section 26 be pivotably connected to the first conveyor section 22 for pivoting about axis A2, with the links 60A, 60B coupled to the head section 26 in the same manner described above in respect of the middle section 24. In other embodiments, there may be more than three folding conveyor sections connected in series, or end-to end. In any case, the preferred arrangement is that, starting with the base conveyor section, a respective linkage (e.g. comprising one or more link which may be the same or similar to the links 60A, 60B, 70A, 70B) is coupled between each conveyor section and the next-but-one conveyor section (i.e. between alternate conveyor sections or every second conveyor section) in the series of end-to-end conveyor sections that make up the conveyor, except for the last conveyor section in the series (i.e. the head conveyor section) and the penultimate conveyor section in the series since there is no next-but-one conveyor section with which they can be coupled in the manner described above.

The invention is not limited to the embodiment(s) described herein but can be amended or modified without departing from the scope of the present invention.

## Claims

1. A conveyor comprising:
a base section;
a first folding section; and
a second folding section,
wherein said base section, said first folding section and said second folding section are arranged end-to-end, said first folding section being pivotably coupled to said base section for pivoting movement about a first pivot axis, and said second folding section being pivotably coupled to said first folding section for pivoting movement about a second pivot axis, said first and second pivot axes being parallel with each other,
and wherein at least one first link, having a fixed or fixable length, is pivotably coupled, in use, to said base section, or to a base structure, for pivoting movement about a third pivot axis and to said second folding section for pivoting movement about a fourth pivot axis, said third and fourth pivot axes being parallel with each other and with said first and second pivot axes.

2. The conveyor of claim 1, wherein said at least one first link is arranged to cause pivoting movement of either one of said first and second folding sections about the respective first or second pivot axis in response to pivoting movement of the other of said first and second folding sections about the respective first or second pivot axis.

3. The conveyor of claims 1 or 2, wherein said at least one first link is arranged such that, in response to pivoting movement of said first folding section with respect to said base section about said first pivot axis, said at least one first link causes said second folding section to pivot with respect to said first folding section about said second pivot axis and/or such that in response to pivoting movement of said second folding section with respect to said first folding section about said second pivot axis, said at least one first link causes said first folding section to pivot with respect to said base section about said first pivot axis.

4. The conveyor of any preceding claim, wherein the conveyor is operable between a deployed state and a folded state by pivoting movement of the folding sections, preferably including pivoting movement of said first folding section with respect to said base section about said first pivot axis, and pivoting movement of said second folding section with respect to said first folding section about said second pivot axis, and wherein, preferably, in said deployed state the folding sections are arranged to facilitate conveying material from a feed end of the conveyor to a discharge end of the conveyor and are typically coplanar or substantially coplanar with each other, and in the folded state the folding sections are typically non-coplanar with each other.

5. The conveyor of any preceding claim, further including a third folding section arranged end-to-end with said second folding section and being pivotably coupled to said second folding section for pivoting movement about a fifth pivot axis, said fifth pivot axis being parallel with said first and second pivot axes, and wherein at least one second link, having a fixed or fixable length, is pivotably coupled to said first section for pivoting movement about a sixth pivot axis and to said third folding section for pivoting movement about a seventh pivot axis, said sixth and seventh pivot axes being parallel with each other and with said first and second pivot axes, and wherein, preferably, said at least one second link is arranged to cause pivoting movement of either one or said second and third folding sections about the respective second or fifth pivot axis in response to pivoting movement of the other of said second and third folding sections about the respective second or fifth pivot axis, and/or wherein said at least one second link is arranged such that, in response to pivoting movement of said second folding section with respect to said first folding section about said second pivot axis, said at least one second link causes said third folding section to pivot with respect to said second folding section about said fifth pivot axis and/or such that in response to pivoting movement of said third folding section with respect to said second folding section about said fifth pivot axis, said at least one second link causes said second folding section to pivot with respect to said first section about said second pivot axis.

6. The conveyor of any preceding claim, wherein the conveyor includes or is co-operable with actuating means arranged to cause pivoting movement of at least one of said folding sections, the actuating means preferably being arranged to act on, preferably to act directly on, one of said folding sections, conveniently on said first folding section, said actuating means typically being operable to operate said conveyor between a deployed state and a folded state, and wherein, preferably, said actuating means comprises a single actuator or a single set of actuators, and wherein, preferably, said actuating means is coupled between one of said folding sections, preferably said first folding section, and said base section, or between one of said folding sections, preferably said first folding section, and a base structure, wherein said base structure may be a ground structure or part of an apparatus on which the conveyor is provided; or wherein said at least one actuator is coupled between any two of said folding sections.

7. The conveyor of any preceding claim, wherein said at least one first link comprises first and second first links spaced apart in a transverse direction of the conveyor, conveniently being located at a respective side of the conveyor, and preferably being parallel, or substantially parallel, with each other, and/or wherein the, or each, first link extends obliquely with respect to the longitudinal axis of the first conveyor section and/or passes through the plane in which both the first and second pivot axes lie.

8. The conveyor of any preceding claim, wherein the, or each, first link includes a length-adjusting mechanism for adjusting the length of the respective first link, and/or wherein the, or each, first link comprises a bar, rod or other rigid, or substantially rigid, structure.

9. The conveyor of any preceding claim, wherein said third pivot axis is spaced apart from said first pivot axis at least in a direction that is perpendicular to both the longitudinal and transverse axes of the conveyor, such that said third pivot axis is typically located above or below the first pivot axis when the conveyor is in use, and/or wherein the third pivot axis is spaced apart from the first pivot axis in a longitudinal direction of the conveyor, and/or wherein said fourth pivot axis is spaced apart from said second pivot axis at least in a direction that is perpendicular to both the longitudinal and transverse axes of the conveyor, such that said fourth pivot axis is typically located above or below the second pivot axis when the conveyor is in use, and/or wherein the fourth pivot axis is spaced apart from the second pivot axis in a longitudinal direction of the conveyor.

10. The conveyor of claim 5 or any other claim when dependent on claim 5, wherein said at least one second link comprises first and second links spaced apart in a transverse direction of the conveyor, conveniently being located at a respective side of the conveyor, and preferably being parallel, or substantially parallel, with each other, and/or wherein the, or each, second link extends obliquely with respect to the longitudinal axis of the second conveyor section and/or passes through the plane in which both the second and third pivot axes lie.

11. The conveyor of claim 5 or any other claim when dependent on claim 5, wherein the, or each, second link includes a length-adjusting mechanism for adjusting the length of the respective second link, and/or wherein the, or each, second link comprises a bar, rod or other rigid, or substantially rigid, structure.

12. The conveyor of claim 5 or any other claim when dependent on claim 5, wherein said sixth pivot axis is spaced apart from said second pivot axis at least in a direction that is perpendicular to both the longitudinal and transverse axes of the conveyor, such that said sixth pivot axis is typically located above or below the second pivot axis when the conveyor is in use, and/or wherein the sixth pivot axis is spaced apart from the second pivot axis in a longitudinal direction of the conveyor, and/or wherein said seventh pivot axis is spaced apart from said fifth pivot axis at least in a direction that is perpendicular to both the longitudinal and transverse axes of the conveyor, such that said seventh pivot axis is typically located above or below the fifth pivot axis when the conveyor is in use, and/or wherein the seventh pivot axis is spaced apart from the fifth pivot axis in a longitudinal direction of the conveyor.

13. The conveyor of any preceding claim, wherein said first folding section is pivotably coupled to said base section by a coupling that allows limited pivoting movement of said first folding section with respect to said base section about said first axis without causing said at least one first link to effect relative pivoting movement between said first and second folding sections about said second pivot axis, wherein said coupling may comprise a pivot and a journal bearing, the journal being configured to allow linear movement of the journal bearing with respect to the pivot, and wherein, preferably, during the limited pivoting movement, the folding conveyor sections are configured to pivoting in unison with each other about said first axis.

14. The conveyor of claim 4 or any other claim when dependent on claim 4, wherein each folding section includes, and/or is co-operable with, at least one stop formation or other stop means configured to limit pivoting movement of the respective folding section in an angular direction corresponding to unfolding of the conveyor in order to stop pivoting movement of the respective folding section when the deployed state of the conveyor is reached.

15. A material processing apparatus comprising at least one conveyor as claimed in any preceding claim, wherein said material processing apparatus may be a material screening apparatus, a material crushing apparatus or a material washing apparatus, and wherein said at least one conveyor is installed on said apparatus such that said base section serves as a feed end of the conveyor.
